# EUROPÄISCHE PATENTSCHRIFT

(11) **EP 2 001 718 B1**
(45) Veröffentlichungstag und Bekanntmachung des Hinweises auf die Patenterteilung: **30.03.2011**
(21) Anmeldenummer: 07724006.7
(22) Anmeldetag: 04.04.2007
(51) Int. Cl.: B60W 10/20, B60W 10/18, B60W 10/04, B60W 50/08, B62D 1/02, B62D 1/28, B62D 15/02

(54) **STEUERVORRICHTUNG FÜR KRAFTFAHRZEUGE ZUM ERLERNEN DES SELBSTSTÄNDIGEN BEFAHRENS EINER VORGEGEBENEN IDEALLINIE**
CONTROL APPARATUS FOR MOTOR VEHICLES FOR LEARNING TO AUTOMATICALLY TRAVEL ALONG A PREDEFINED IDEAL LINE
DISPOSITIF DE COMMANDE POUR VEHICULES AUTOMOBILES DESTINE A APPRENDRE LA CIRCULATION AUTOMATIQUE LE LONG D'UNE LIGNE IDEALE DONNEE

(30) Priorität: 06.04.2006 DE 102006016185
(43) Veröffentlichungstag der Anmeldung: 17.12.2008
(73) Patentinhaber: Bayerische Motoren Werke Aktiengesellschaft, 80809 München (DE)
(72) Erfinder: WALDMANN, Peter, 80993 München (DE); SPANNHEIMER, Helmut, 85630 Neukeferloh (DE)
(86) Internationale Anmeldenummer: PCT/EP2007/003065
(87) Internationale Veröffentlichungsnummer: WO 2007/115775

(56) Entgegenhaltungen:
- EP-A- 1 424 261
- EP-A1- 0 971 276
- DE-A1- 3 912 353
- DE-A1- 10 259 168
- DE-A1- 10 358 498
- DE-A1-102004 030 997

## Beschreibung

Die Erfindung bezieht sich auf eine Steuervorrichtung für Kraftfahrzeuge zum Erlernen des selbstständigen Befahrens einer vorgegebenen zeitoptimalen Ideallinie eines abgeschlossenen Streckenverlaufs, vorzugsweise einer Rennstrecke.

Viele motorsportbegeisterte Autofahrer fahren in ihrer Freizeit auf Rennstrecken um das Potential ihres Fahrzeugs ergründen bzw. ausnutzen zu können. Dabei haben sie häufig den Wunsch, die Rennstrecke in einer Weise zu befahren, wie sie von namhaften Rennfahrern befahren wird. Dazu müssen sie einerseits wissen, wie die die vom Rennfahrer gefahrene Ideallinie verläuft, und andererseits wie sie dieser Ideallinie folgen können. Dazu muss der Fahrer in der Regel unterstützt werden.

Steuervorrichtungen für Kraftfahrzeuge zum Unterstützen des Fahrers beim Fahren im normalen Straßenverkehr sind bereits bekannt. So offenbart die DE 101 17 237 A1 bereits eine Fahrzeugsteuervorrichtung, die eine Fahrzeugpositionsschätzvorrichtung zum Schätzen der aktuellen Position und einen Kartendatenspeicher zum Speichern von Kartendaten umfasst. Aus den Kartendaten wird eine ortsoptimale Ideallinie ermittelt, auf der sich das Fahrzeug bewegen soll. In Abhängigkeit von den gespeicherten Kartendaten bzw. der ermittelten ortsoptimalen Ideallinie und der aktuellen Position kann eine sog. "Fahrbahn-wird-verlassen-Wamung" ausgegeben werden, falls die aktuelle Position des Fahrzeugs von der aus den Kartendaten ermittelten ortsoptimalen Ideallinie abweicht. Alternativ oder zusätzlich kann auch mittels einer Fahrunterstützungssteuervorrichtung aktiv in den Fahrverlauf des Fahrzeugs eingegriffen werden. Diese Fahrzeugsteuervorrichtung dient somit dazu, den Fahrer zu warnen oder zu schützen.

Aus der DE 10 2004 030 997 A1 ist ein Fahrerassistenzsystem für Hochgeschwindigkeitsfahrten bekannt, das auf der Grundlage eines mittels des Navigationssystems ermittelten optimalen Ideallinie an den Fahrer u. a. Anweisungen zum Einhalten der optimalen Beschleunigungs- und Bremszeitpunkte erzeugt. Die Anweisungen werden entweder in Form einer optischen Information oder durch Erzeugen einer Stellkraft oder eines Moments auf das vom Fahrer zu betätigende Bedienelement ausgegeben. Wie praktische Versuche gezeigt haben, reicht ein derartiges Fahrerassistenzsystem nicht immer aus, dem Fahrer ein schnelles und sicheres Erlernen des Befahrens einer vorgegebenen zeitoptimalen Ideallinie einer Rennstrecke zu ermöglichen. Vielmehr bedarf es eines komplexen mehrstufigen Lernprozesses.

Neben derartigen Steuervorrichtungen sind auch andere Steuervorrichtungen für Kraftfahrzeuge bekannt, die prinzipiell zumindest teilweise ein autonomes, also selbstständiges Fahren des Fahrzeugs ermöglichen.

So ist bspw. aus der DE 691 17 549 T2 ein Gerät zum automatischen bzw. teilweise autonomen Fahren eines Fahrzeugs bekannt. Hierbei wird ein Bild eines Bereichs vor dem Fahrzeug in dessen Fahrrichtung erfasst und in Abhängigkeit von diesen Daten ein Zielkurs festgesetzt. Anschließend wird ein Lenkwert derart generiert, dass durch automatische Ansteuerung der Lenkaktuatorik mit dem Lenkwert das Fahrzeug dem Zielkurs folgt. Bevorzugt kann der Kurs unter Berücksichtigung der Straßenkontur und der Fahrgeschwindigkeit des Fahrzeugs bestimmt werden. Augrund der kontinuierlichen Ermittlung bzw. Erfassung des Bereichs vor dem Fahrzeug in Fahrtrichtung kann das Fahrzeug selbst bei einer Abweichung vom Zielkurs einem gleichförmigen Gesamtkurs in dem zulässigen Fahrbereich folgen, so dass das Fahrzeug nicht auf den ursprünglichen, einmal in dem zulässigen Fahrbereich festgesetzten Zielkurs zurück gezwungen wird. Bei diesem Gerät wird somit ständig ein neuer Zielkurs berechnet.

Weiter sind aus der EP 0 913 751 B1 ein vollständig autonomes Fahrzeug und ein Verfahren zur Steuerung des vollständig autonomen Fahrzeugs bekannt, die jeweils ebenfalls für den Einsatz im öffentlichen Straßenverkehr geeignet sind. Aufgrund des Einsatzes im Straßenverkehr muss das Fahrzeug mit einer Vielzahl von Sensoren zum Erfassen des Umfelds des Fahrzeugs ausgestattet sein, um kritische Situationen vorbeugen zu können.

Schließlich sind im Materialtransportwesen, bspw. zur Materiallieferung in großen Montagewerken einfache autonome unbemannte Fahrzeuge bekannt, bei denen beispielsweise längs der Fahrstrecke ein Führungskabel oder Ähnliches zum Führen des Fahrzeugs angeordnet ist. Derartige Vorrichtungen sind jedoch sehr aufwendig und eignen sich nur für Montagewerke, in denen unbemannte Fahrzeuge ständig den gleichen Weg fahren.

Der nächstliegende Stand der Technik ist DE 39 12 353 A1 und zeigt den Oberbegriff des Anspruchs 1.

Aus dem genannten Stand der Technik ergibt sich somit, dass bereits eine Vielzahl von autonomen Fahrzeugen bzw. Verfahren zum Steuern autonomer Fahrzeuge bekannt sind, wobei diese Verfahren bzw.

Vorrichtungen in Abhängigkeit vom jeweiligen Einsatz unterschiedlich ausgestaltet sein müssen.

Aufgabe der Erfindung ist es nun, eine Steuervorrichtung für Kraftfahrzeuge anzugeben, welches dem Fahrer ein schnelles und einfaches Erlernen des selbstständigen Befahrens einer vorgegebenen zeitoptimalen Ideallinie einer Rennstrecke ermöglicht.

Diese Aufgabe wird erfindungsgemäß durch eine Steuervorrichtung nach Patentanspruch 1 gelöst. Vorteilhafte Weiterbildungen ergeben sich aus den abhängigen Ansprüchen.

Die erfindungsgemäße Steuervorrichtung für Kraftfahrzeuge zum Erlernen des selbständigen Befahrens einer vorgegebenen zeitoptimalen Ideallinie eines abgeschlossenen Streckenverlaufs, vorzugsweise einer Rennstrecke umfasst eine Speichereinheit, in der zumindest die Positionsdaten der Ideallinie der Rennstrecke gespeichert sind, eine Positionserkennungseinheit zum Bestimmen der aktuellen Positionsdaten des Kraftfahrzeugs relativ zur Ideallinie, und eine Aktuatoransteuereinheit zum automatischen Ansteuern von Aktuatoren des Kraftfahrzeugs, wobei in einer einstellbaren ersten Stufe der Steuervorrichtung in Abhängigkeit von den Positionsdaten der Ideallinie und den aktuellen Positionsdaten des Kraftfahrzeugs relativ zur Ideallinie zumindest die Lenkaktuatoren des Kraftfahrzeugs durch die Aktuatoransteuereinheit derart automatisch angesteuert werden, dass sich das Kraftfahrzeug zumindest im Hinblick auf die Querführung autonom entlang der Ideallinie der Rennstrecke bewegt.

Die zeitoptimale Ideallinie entspricht derjenigen Fahrlinie, die gefahren werden muss, um den abgeschlossenen Streckenverlauf in etwa in kürzester Zeit durchfahren zu können. Die dazugehörigen Positionsdaten der zeitoptimalen Kennlinie können im Vorfeld entweder aufgrund des

Streckenverlaufs berechnet werden, oder aus einer Aufzeichnung der Positionsdaten beim Befahren des abgeschlossenen Streckeriverlaufs durch einen Rennfahrer ermittelt werden. Diese ermittelten Positionsdaten der zeitoptimalen Ideallinie werden in die Steuervorrichtung eingelesen, wo sie anschließend in der Speichereinheit abgespeichert werden.

Um die im Hinblick auf die Querführung autonome Fahrzeugbewegung entlang der Ideallinie ermöglichen zu können, müssen weiter die aktuellen absoluten Positionsdaten des Fahrzeugs bzw. die aktuellen relativen Positionsdaten des Fahrzeugs zur Ideallinie bekannt sein. Diese Positionserkennungseinheit kann beispielsweise auf GPS-gestützter Inertialmesstechnik basieren.

Schließlich umfasst die Steuervorrichtung die bereits oben genannte Aktuatoransteuereinheit, mittels derer in der ersten Stufe zumindest die Lenkaktuatoren automatisch angesteuert werden können. Die Ansteuerung basiert zumindest auf den Positionsdaten der Ideallinie, und zwar derart, dass beim zumindest teilweise automatischen Befahren des abgeschlossenen Kurvenverlaufs die aktuelle Position des Fahrzeugs relativ zu den dazugehörigen Positionsdaten der Ideallinie minimal, idealerweise Null ist.

Vorteilhafterweise sind in der Speichereinheit zusätzlich zu den Positionsdaten der Ideallinie die zu den Positionsdaten dazugehörigen optimalen Geschwindigkeitsdaten bzw. Beschleunigungs- und Verzögerungsdaten gespeichert. In der einstellbaren ersten Stufe der Steuervorrichtung werden die Lenk, Beschleunigungs- und Verzögerungsaktuatoren dann derart angesteuert, dass sich das Kraftfahrzeug im Hinblick auf die Quer- und Längsführung vollständig autonom entlang der Ideallinie mit einer den Geschwindigkeitsdaten entsprechenden Geschwindigkeit bewegt.

Bei dieser Ausgestaltung der Erfindung wird dem Fahrer nicht nur die zeitoptimale Ideallinie aufgezeigt bzw. vorgegeben, vielmehr kann er zusätzlich auch ergeben, in welcher Geschwindigkeit die Ideallinie gefahren werden kann oder durch Rennfahrer gefahren wird. Hierbei werden durch die Aktuatoransteuereinheit nicht nur die Lenkaktuatoren, sondern auch die Beschleunigungs- und Verzögerungsaktuatoren automatisch angesteuert.

Da bei einer derartigen Ausgestaltung der Erfindung der Lerneffekt aufgrund der hohen Geschwindigkeiten nicht unbedingt im Vordergrund steht, können in einer alternativen Ausgestaltung der Erfindung Eingabemittel vorhanden sein, mit denen ein Geschwindigkeitsbereich vorgebbar ist, in dem sich das Kraftfahrzeug in der ersten Stufe autonom bewegen soll.

Hierbei können beispielsweise ebenfalls zu den Positionsdaten der Ideallinie zusätzlich die dazugehörigen optimalen Geschwindigkeitsdaten bzw. Beschleunigungs- und Verzögerungsdaten gespeichert werden. Der Geschwindigkeitsbereich kann vom Fahrer vorgegeben werden. Wählt dieser beispielsweise einen langsamen Geschwindigkeitsbereich, werden für das vollständig autonome Befahren des abgeschlossenen Streckenverlaufs zu den Positionsdaten dazugehörige Geschwindigkeitsdaten bzw. Beschleunigungs- und Verzögerungsdaten vorgegeben, die bspw. um 50% geringer sind, als die optimalen Geschwindigkeitsdaten. Das Fahrzeug würde dann bspw. immer noch bei den jeweiligen Beschleunigungs- und Verzögerungspunkten beschleunigen oder verzögern, aber nur auf eine geringere Maximalgeschwindigkeit.

Damit der Fahrer auch versteht, warum die autonom befahrene Ideallinie optimal ist, werden ihm für das Verständnis der Ideallinie in einer vorteilhaften Ausgestaltung der Erfindung wichtige Fahrinformationen optisch und/oder akustisch und/oder haptisch mitgeteilt. So kann dem Fahrer bspw. beim autonomen Befahren einer S-Kurve über ein Display mitgeteilt werden, dass aufgrund der S-Kurve der Scheitel der ersten Kurve nach hinten gelegt wird, um die zweite Kurve mit einer maximalen Beschleunigung oder Geschwindigkeit verlassen zu können. Diese Fahrinformationen können dem Fahrer auch vorab bei einer virtuellen Fahrt in einem Fahrsimulator oder vor Fahrtbeginn in Form einer Offline-Simulation auf einem Display im Fahrzeug übermittelt werden.

Nachdem der Fahrer in der einstellbaren ersten Stufe der erfindungsgemäßen Steuervorrichtung schon eine grobe Vorstellung von der zeitoptimalen Ideallinie erlangt hat, werden vorteilhafterweise in einer einstellbaren zweiten Stufe der Steuervorrichtung die Aktuatoren des Kraftfahrzeugs unabhängig von der Aktuatoransteuereinheit, also nicht automatisch durch die Aktuatoransteuereinheit angesteuert, sondern durch Betätigung entsprechender Bedienelemente durch den Fahrer, und zwar derart, dass der Fahrer selbständig in etwa der Ideallinie folgt. Zusätzlich sind Mittel vorhanden, die in Abhängigkeit von den aktuellen Positionsdaten des Kraftfahrzeugs relativ zur Ideallinie Hinweisinformationen ausgeben können. Diese Hinweisinformationen werden in einer Ermittlungseinheit erzeugt.

In der zweiten Stufe werden somit die aktiven Eingriffe abgeschaltet. Der Fahrer fährt in der zweiten Stufe selbstständig entlang des abgeschlossenen Streckenverlaufs. Durch die Verfügbarkeit einer genauen Positionserkennungseinheit, bspw. einer GPS-gestützten Inertialmesstechnik, und einer hochgenauen Digitalkarte, die ebenfalls mittels der Positionserkennungseinheit erstellt werden kann, werden durch einen dynamischen Map-Matching Algorithmus Querablage und Kurswinkelfehler zur zeitoptimalen Ideallinie bezogen auf eine streckenfeste Referenzlinie, beispielsweise der Mittellinie, berechnet.

Querablage, Kurswinkelfehler und Geschwindigkeitsdifferenz beschreiben die Abweichung von der gewünschten Ideallinie. Sind Querablage, Kurswinkelfehler und Geschwindigkeitsdifferenz gleich Null, so bewegt sich das Fahrzeug genau entlang der vorgegebenen zeitoptimalen Ideallinie mit der vorgegebenen Geschwindigkeit.

Zusätzlich erhält der Fahrer in der zweiten Stufe Informationen über seine aktuelle Abweichung zur zeitoptimalen Ideallinie des abgeschlossenen Streckenverlaufs oder über streckenspezifische Eingriffspunkte, wie Einlenkpunkte, Beschleunigungs- oder Verzögerungspunkte. Die Informationen können dem Fahrer optisch und/oder akustisch und/oder haptisch übermittelt werden. Wird der Hinweis bzw. die Information optisch an den Fahrer übermittelt, erscheint dies beispielsweise in einem Display, vorzugsweise in einem Head-up-Display. Soll der Hinweis bzw. die Information dem Fahrer in Form von haptischen Signalen übermittelt werden, können in den Lenkradspeichen mechanische oder elektrische Impulse erzeugt werden, die der Fahrer durch seine am Lenkrad befindlichen Hände wahrnehmen kann. In einer besonders vorteilhaften Ausgestaltung können die mechanischen oder elektrischen Impulse für verschiedene Lenkinformationen für die linke und rechte Seite getrennt ausgegeben werden. Mit diesen Informationen kann der Fahrer während der Fahrt jederzeit überprüfen, wie gut er das bereits Erlernte umsetzen kann und ggf. kleine Abweichungen korrigieren. Diese Informationen können auch gespeichert werden, so dass der Fahrer auch noch nach Befahren der Rennstrecken die Möglichkeit hat, sich die Informationen bzw. Hinweise zu verinnerlichen.

Nachdem der Fahrer den abgeschlossenen Streckenverlauf in der zweiten Stufe der Steuervorrichtung mehrmals durchfahren hat, können vorteilhafterweise in einer einstellbaren dritten Stufe der Steuervorrichtung die Aktuatoren (entsprechend der zweiten Stufe) ebenfalls lediglich durch Betätigung der entsprechenden Bedienelemente durch den Fahrer selbst derart angesteuert werden, dass der Fahrer selbständig der ortoptimalen Ideallinie folgt. Im Unterschied zur zweiten Stufe werden in der dritten Stufe jedoch keine Hinweise in Hinblick auf die Abweichung der vom Fahrer gefahrenen Linie zur gespeicherten Ideallinie mehr an den Fahrer ausgegeben. Der Fahrer soll in dieser dritten Stufe das bereits Erlernte nun vollkommen ohne Unterstützung umsetzen.

Nach Befahren der Rennstrecke in der dritten Stufe der Steuervorrichtung werden vorteilhafterweise in einer Ermittlungseinheit die Abweichungen der gefahrenen Linie zur Ideallinie ermittelt. In Abhängigkeit dieser ermittelten Abweichungen werden anschließend, also erst nach Befahren der Rennstrecke relevante Informationen an den Fahrer ausgegeben.

Bei den relevanten Informationen kann es sich beispielsweise um eine Bewertung handeln, wie gut der Fahrer der Ideallinie gefolgt ist. Die Bewertung kann in Form von einem Notensystem von eins bis sechs oder in Prozentangaben ausgegeben werden. Zusätzlich kann dem Fahrer noch mitgeteilt werden, an welchen Stellen im abgeschlossenen Streckenverlauf er die größten Abweichungen zur ortsoptimalen Ideallinie hatte. Dadurch soll dem Fahrer die Möglichkeit gegeben werden, beim erneuten Befahren des abgeschlossenen Streckenverlaufs in der dritten Stufe der Steuervorrichtung besonders auf diejenigen Streckenabschnitte zu achten, in denen seine Abweichungen von der Ideallinie am größten waren.

Um den Fahrern in der zweiten und dritten Stufe der Steuervorrichtung auch bei selbstständigen Befahren des abgeschlossenen Streckenverlaufs ausreichend schützen zu können, kann vorteilhafterweise in der zweiten und dritten Stufe der Steuervorrichtung mittels der Aktuatoransteuereinheit ein automatischer Noteingriff in die Ansteuerung der Aktuatoren vorgenommen werden falls ein Abkommen von der Strecke oder eine andere kritische Situation droht. Dies bedeutet, dass der Fahrer in jeder Lage ausreichend geschützt wird, auch wenn er den Streckenverlauf falsch einschätzt und daraufhin die relevanten Aktuatoren falsch ansteuert.

Die Erfindung wird im Folgenden anhand einer Zeichnung näher erläutert.

Dabei zeigt die
- Fig. 1: ein Ausführungsbeispiel der erfindungsgemäßen Steuervorrichtung und
- Fig. 2: ein vereinfachtes Ablaufdiagramm der Steuervorrichtung zum Erlernen des selbstständigen Befahrens einer vorgegebenen zeitoptimalen Ideallinie eines abgeschlossenen Streckenverlaufs.

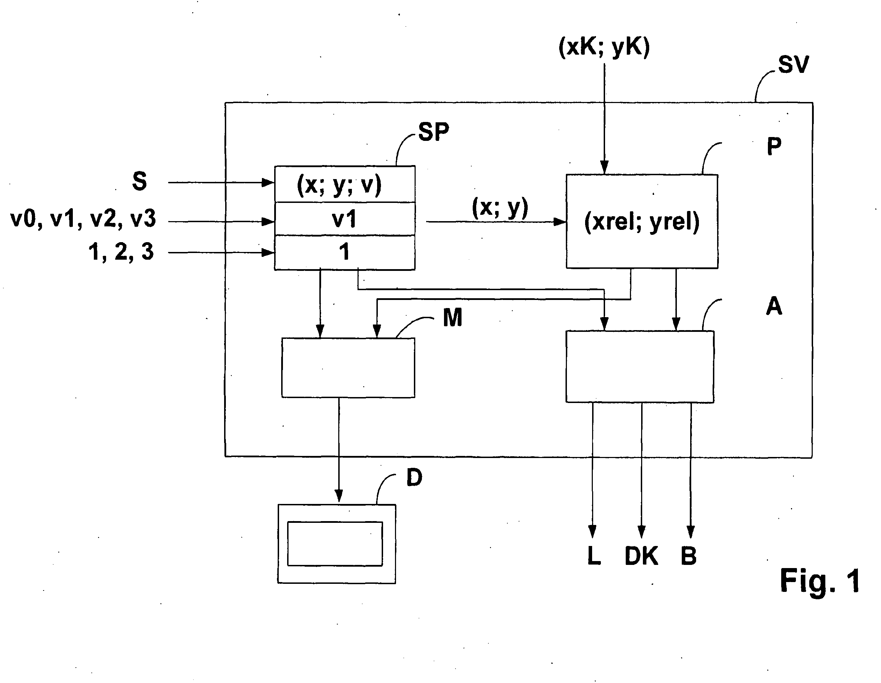

In der Fig. 1 ist eine Steuervorrichtung SV dargestellt, die eine Speichereinheit SP umfasst. In der Speichereinheit sind die Positionsdaten (x; y) und die dazugehörigen Geschwindigkeitsdaten (v) der Ideallinie des abgeschlossenen Streckenverlaufs S, den der Fahrer ausgewählt hat, gespeichert. Weiter ist in der Speichereinheit SP gespeichert, welcher Geschwindigkeitsbereich v0, v1, v2 oder v3 zum Durchfahren des abgeschlossenen Streckenverlaufs S in der ersten Stufe der Steuervorrichtung SV ausgewählt wurde. In der Fig. 1 wurde der langsamste Geschwindigkeitsbereich v1 ausgewählt. Schließlich wird in der Speichereinheit SP auch gespeichert, weiche Stufe 1, 2 oder 3 der Fahrer ausgewählt hat. Hier ist es die Stufe 1.

Weiter umfasst die Steuervorrichtung SV eine Positionserkennungseinheit P zum Bestimmen der aktuellen Position des Kraftfahrzeugs relativ zur Ideallinie (xrel; yrel). Die relative Position des Kraftfahrzeugs (xrel; yrel) wird aus den Positionsdaten der Ideallinie (x; y) und den aktuellen Positionsdaten des Fahrzeugs (xK; yK) für jeden Streckenpunkt ermittelt.

Schließlich umfasst die Steuervorrichtung eine Aktuatoransteuereinheit A zum automatischen Ansteuern verschiedener Aktuatoren L, B und DK des Kraftfahrzeugs und eine Ermittlungseinheit M zum Erzeugen verschiedener Informationen bzw. Hinweise, die an ein Display D ausgegeben werden können.

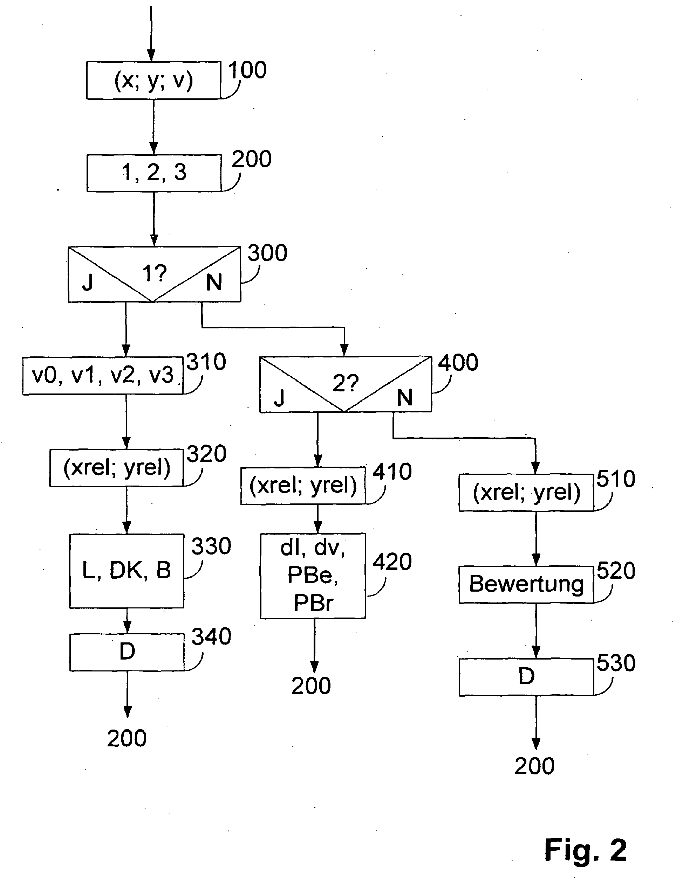

Anhand der Fig. 2 wird mittels eines vereinfachten Ablaufdiagramms erläutert, wie die Steuervorrichtung das Erlernen des selbstständigen Befahrens einer vorgegebenen zeitoptimalen Ideallinie eines abgeschlossenen Streckenverlaufs ermöglicht.

Sobald die Steuervorrichtung zum Erlernen des selbstständigen Befahrens einer vorgegebenen zeitoptimalen Ideallinie eines abgeschlossenen Streckenverlaufs aktiv ist, werden in einem ersten Schritt 100 die Positionsund Geschwindigkeits- bzw. Beschleunigungs- und Verzögerungsdaten (x; y; v) des vom Fahrer ausgewählten abgeschlossenen Streckenverlaufs gespeichert. Diese Daten können entweder bereits fest im Fahrzeug gespeichert sein, oder von einer DVD oder über einen anderen externen Datenträger an das Fahrzeug bzw. die Speichereinheit übermittelt werden. In einem Schritt 200 kann der Fahrer die Stufe der Steuervorrichtung auswählen, die er für das Erlernen des Befahrens benötigt.

Im Schritt 300 wird abgefragt, ob der Fahrer die erste Stufe 1 ausgewählt hat. Hat er diese erste Stufe 1 ausgewählt, wird im Schritt 310 der vom Fahrer ausgewählte Geschwindigkeitsbereich v0, v1, v2 oder v3 in der Speichereinheit gespeichert.

Im Schritt 320 wird kontinuierlich die aktuelle Position des Kraftfahrzeugs relativ zur Ideallinie (xrel; yrel) ermittelt. Im Schritt 330 werden dann kontinuierlich durch die Aktuatoransteuereinheit in Abhängigkeit von den Positionsdaten und den dazugehörigen Geschwindigkeitsdaten (x; y; v) der Ideallinie, dem ausgewählten Geschwindigkeitsbereich v0, v1, v2 oder v3 und der ermittelten aktuellen Position des Kraftfahrzeugs relativ zur Ideallinie (xrel; yrel) die Lenkaktuatoren L, die Beschleunigungsaktuatoren DK und die Bremsaktuatoren B derart angesteuert, dass sich das Kraftfahrzeugs entsprechend dem ausgewählten Geschwindigkeitsbereich autonom entlang der Ideallinie des abgeschlossenen Kurvenverlaufs bewegt. Ist als Geschwindigkeitsbereich v0 ausgewählt, wird von der Aktuatoransteuereinheit lediglich die Querführung des Fahrzeugs übernommen, also nur die Lenkaktuatoren L automatisch angesteuert. Für die Längsführung ist der Fahrer selbst durch Betätigung entsprechender Bedienelemente wie Gaspedal und Bremspedal zuständig. Zusätzlich werden im Schritt 340 Informationen in Form von optischen Signalen an ein Display D ausgegeben.

Hat der Fahrer den ganzen Streckenverlauf in der ersten Stufe der Steuervorrichtung durchfahren, wird vom Schritt 340 zum Schritt 200 gesprungen. Im Schritt 200 kann der Fahrer erneut die Stufe der Steuervorrichtung auswählen, die er für das Erlernen des Befahrens benötigt.

Im Schritt 300 wird wieder abgefragt, ob der Fahrer die erste Stufe 1 ausgewählt hat. Hat er diese erste Stufe 1 ausgewählt, werden wieder die Schritte 310 bis 340 durchgeführt. Hat er nicht die erste Stufe 1 ausgewählt, wird vom Schritt 300 in den Schritt 400 übergegangen.

Im Schritt 400 wird abgefragt, ob der Fahrer die zweite Stufe 2 der Steuervorrichtung ausgewählt hat. Hat er diese zweite Stufe2 ausgewählt, wird zum Schritt 410 übergegangen, in dem wiederum kontinuierlich die aktuellen Position des Kraftfahrzeugs relativ zur Ideallinie (xrel; yrel) ermittelt wird. In dieser zweiten Stufe 2 findet jedoch keine automatische Ansteuerung der Aktuatoren durch die Aktuatoransteuereinheit mehr statt. Vielmehr werden im Schritt 420 kontinuierlich lediglich in Abhängigkeit von der aktuellen Position des Kraftfahrzeugs relativ zur Ideallinie (xrel: yrel) Hinweise über den relativen Abstand zur Ideallinie dl und/oder über den relativen Geschwindigkeitsabstand zu den optimalen Geschwindigkeitsdaten dv und/oder über streckenspezifische Eingriffspunkte wie Beschleunigungszeitpunkt PBe oder Bremszeitpunkt PBr ermittelt und ausgegeben.

Hat der Fahrer den ganzen Streckenverlauf in der zweiten Stufe 2 der Steuervorrichtung durchfahren, wird vom Schritt 420 zum Schritt 200 gesprungen. Im Schritt 200 kann der Fahrer erneut die Stufe der Steuervorrichtung auswählen, die er für das Erlernen des Befahrens benötigt.

im Schritt 300 wird wieder abgefragt, ob der Fahrer die erste Stufe 1 ausgewählt hat. Hat er diese erste Stufe 1 ausgewählt, werden wieder die Schritte 310 bis 340 durchgeführt. Hat der Fahrer nicht die erste Stufe 1 ausgewählt, wird vom Schritt 300 in den Schritt 400 übergegangen. Hat er die zweite Stufe 2 ausgewählt, werden wieder die Schritte 410 und 420 durchgeführt. Hat er weder die erste Stufe 1 noch die zweite Stufe 2 ausgewählt, wird vom Schritt 400 in den Schritt 510 übergegangen.

Im Schritt 510 wird entsprechend den Schritten 320 und 410 kontinuierlich die aktuelle Position des Kraftfahrzeugs relativ zur Ideallinie (xrel; yrel) ermittelt. In dieser dritten Stufe 3 der Steuervorrichtung findet entsprechend der zweiten Stufe 2 ebenfalls keine automatische Ansteuerung der Aktuatoren durch die Aktuatoransteuereinheit mehr statt. Im Unterschied zur zweiten Stufe 2 werden in der dritten Stufe 3 auch keine Hinweise während der Fahrt an den Fahrer ausgegeben. Vielmehr wird im Schritt 520 lediglich eine Bewertung des Fahrers hinsichtlich des selbstständigen Befahrens des abgeschlossenen Streckenverlaufs vorgenommen. Die Bewertung wird in Abhängigkeit vom relativen Abstand zur Ideallinie dl und/oder vom relativen Geschwindigkeitsabstand zu den optimalen Geschwindigkeitsdaten dv vorgenommen. Erst wenn der Fahrer den ganzen Streckenverlauf in der dritten Stufe der Steuervorrichtung durchfahren hat, wird im Schritt 530 die im Schritt 520 ermittelte Bewertung über ein Display D an den Fahrer ausgegeben. Zusätzlich wird dem Fahrer mitgeteilt, an welchen Stellen im abgeschlossenen Streckenverlauf er noch die größten Schwierigkeiten hat. Dies kann dem Fahrer bspw. mittels eines Displays aufgezeigt werden, auf dem der gesamte Streckenverlauf dargestellt ist und diejenigen Bereiche, in denen der Fahrer die größten Schwierigkeiten hatte, mit einer anderen Farbe hervorgehoben werden.

## Patentansprüche

1. Steuervorrichtung (SV) für Kraftfahrzeuge zum Erlernen des selbständigen Befahrens einer vorgegebenen zeitoptimalen Ideallinie eines abgeschlossenen Streckenverlaufs (S), vorzugsweise einer Rennstrecke
- mit einer Speichereinheit (SP), in der zumindest die Positionsdaten der Ideallinie des abgeschlossenen Streckenverlaufs (x; y) gespeichert sind,
- mit einer Positionserkennungseinheit (P) zum Bestimmen der aktuellen Positionsdaten des Kraftfahrzeugs relativ zur Ideallinie (xrel; yrel) und
- mit einer Aktuatoransteuereinheit (A) zum automatischen Ansteuern von Aktuatoren (L, B, DK) des Kraftfahrzeugs,
wobei in einer einstellbaren ersten Stufe (1) der Steuervorrichtung (SV) in Abhängigkeit von den Positionsdaten der Ideallinie (x; y) und den aktuellen Positionsdaten des Kraftfahrzeugs relativ zur Ideallinie (xrel; yrel) zumindest die Lenkaktuatoren (L) des Kraftfahrzeugs durch die Aktuatoransteuereinheit (A) automatisch derart angesteuert werden, dass sich das Kraftfahrzeug zumindest im Hinblick auf die Querführung autonom entlang der Ideallinie des abgeschlossenen Streckenverlaufs bewegt, und wobei in einer einstellbaren dritten Stufe (3) der Steuervorrichtung (SV) die Aktuatoren (L, DK, B) unabhängig von der Aktuatoransteuereinheit (A) durch Betätigung entsprechender Bedienelemente durch den Fahrer derart angesteuert werden, dass der Fahrer selbständig der Ideallinie folgt und keine Hinweise mehr ausgegeben werden, **dadurch gekennzeichnet, dass** nach Befahren des abgeschlossenen Streckenverlaufs in der dritten Stufe (3) der Steuervorrichtung (SV) in einer Ermittlungseinheit (M) in Abhängigkeit vom relativen örtlichen Abstand der gefahrenen Linie zu den Positionsdaten (x; y) der Ideallinie und/oder über den relativen Geschwindigkeitsabstands zu den optimalen Geschwindigkeitsdaten (v) der Ideallinie ein Bewertungsfaktor ermittelt wird und dass Mittel (D) vorhanden sind, die den Bewertungsfaktor ausgeben.

2. Steuervorrichtung nach Anspruch 1, **dadurch gekennzeichnet, dass** in der Speichereinheit (SP) zusätzlich zu den Positionsdaten der Ideallinie (x; y) optimale Geschwindigkeitsdaten (v) und/oder Beschleunigungs- und Verzögerungsdaten gespeichert sind, und dass in der einstellbaren ersten Stufe (1) der Steuervorrichtung (SV) die Beschleunigungs- und Verzögerungsaktuatoren (B, DK) derart angesteuert werden, dass sich das Kraftfahrzeug auch im Hinblick auf die Längsführung autonom entlang der Ideallinie mit einer den Geschwindigkeitsdaten (v) entsprechenden Geschwindigkeit bewegt.

3. Steuervorrichtung nach Anspruch 1, **dadurch gekennzeichnet, dass** Eingabemittel vorhanden sind, mit denen ein Geschwindigkeitsbereich (v0, v1, v2, v3) vorgebbar ist, in dem sich das Kraftfahrzeug in der ersten Stufe (1) autonom bewegt.

4. Steuervorrichtung nach einem der vorangegangenen Ansprüche, **dadurch gekennzeichnet, dass** in einer Ermittlungseinheit M in Abhängigkeit von den Positionsdaten der Ideallinie (x; y) Fahrinformationen ermittelt werden, und dass Mittel (D) vorhanden sind, die während der ersten Stufe (1) die Fahrinformationen in Form von optische und/oder akustische und/oder haptische Signale an den Fahrer ausgeben.

5. Steuervorrichtung nach einem der vorangegangenen Ansprüche, **dadurch gekennzeichnet, dass** in einer einstellbaren zweiten Stufe (2) der Steuervorrichtung (SV) die Lenk- und Beschleunigungsund Verzögerungsaktuatoren (L, DK, B) des Kraftfahrzeugs unabhängig von der Aktuatoransteuereinheit (A) durch Betätigung entsprechender Bedienelemente durch den Fahrer derart angesteuert werden, dass der Fahrer selbständig der Ideallinie folgt, und dass eine Ermittlungseinheit M in Abhängigkeit von den aktuellen Positionsdaten des Kraftfahrzeugs relativ zur Ideallinie (xrel; yrel) Hinweise ermittelt, und dass Mittel (D) vorhanden sind, die die Hinweise in Form von optischen und/oder akustischen und/oder haptischen Signalen ausgeben.

6. Steuervorrichtung nach Anspruch 5, **dadurch gekennzeichnet, dass** die Hinweise in einem Display (D) vorzugsweise in einem Head-up-Display und/oder als mechanische oder elektrische Impulse in den Lenkradspeichen ausgegeben werden.

7. Steuervorrichtung nach Anspruch 5 oder 6, **dadurch gekennzeichnet, dass** die Hinweise Informationen über den relativen örtlichen Abstand (dl) zu den Positionsdaten (x; y) der Ideallinie und/oder über den relativen Geschwindigkeitsabstands (dv) zu den optimalen Geschwindigkeitsdaten (v) der Ideallinie und/oder über streckenspezifische Eingriffspunkte (PBr, PBe) sind.

8. Steuervorrichtung nach einem der vorangegangenen Ansprüche, **dadurch gekennzeichnet, dass** in der zweiten (2) und/oder dritten Stufe (3) der Steuervorrichtung (SV) die Aktuatoransteuereinheit (A) einen automatischen Noteingriff in die Ansteuerung der Aktuatoren (L, DK, B) durchführt, wenn ein Abkommen von der Rennstrecke oder ein Unfall droht.

## Claims

1. A control device (SV) for motor vehicles for learning to independently travel along a predetermined time-optimum ideal line of a closed-off stretch of road (S), preferably a racetrack
- with a memory unit (SP), in which at least the position data of the ideal line of the closed-off stretch of road (x; y) are stored,
- with a position recognition unit (P) for determining the current position data of the motor vehicle relative to the ideal line (xrel; yrel) and
- with an actuator control unit (A) for automatically activating actuators (L, B, DK) of the motor vehicle,
wherein, in an adjustable first stage (1) of the control device (SV), as a function of the position data of the ideal line (x; y) and the current position data of the motor vehicle relative to the ideal line (xrel; yrel), at least the steering actuators (L) of the motor vehicle are automatically activated by the actuator activation unit (A) in such a way that the motor vehicle, at least with regard to the transverse direction, moves autonomously along the ideal line of the closed-off stretch of road, and wherein in an adjustable third stage (3) of the control device (SV), the actuators (L, DK, B) are activated independently of the actuator activation unit (A) by the actuation of corresponding operating elements by the driver, in such a way that the driver independently follows the ideal line and no further indications are output, **characterised in that** after travelling along the closed-off section of road in the third stage (3) of the control device (SV), in a determination unit (M), an evaluation factor is determined as a function of the relative location distance of the line travelled from the position data (x; y) of the ideal line and/or by means of the relative speed distance from the optimal speed data (v) of the ideal line and **in that** means (D) are present, which output the evaluation factor.

2. A control device according to claim 1, **characterised in that** in addition to the position data of the ideal line (x; y), optimal speed data (v) and/or acceleration and deceleration data are stored in the memory unit (SP), and **in that** the acceleration and deceleration actuators (B, DK) are activated in the adjustable first stage (1) of the control device (SV) in such a way that the motor vehicle also moves autonomously along the ideal line at a speed corresponding to the speed data (v) with regard to the longitudinal direction.

3. A control device according to claim 1, **characterised in that** input means are present, with which a speed range (v0, v1, v2, v3) can be specified, in which the motor vehicle moves autonomously in the first stage (1).

4. A control device according to any one of the preceding claims, **characterised in that** driving information is determined in a determination unit (M) as a function of the position data of the ideal line (x; y), and **in that** means (D) are present, which output the driving information in the form of optical and/or acoustic and/or haptic signals to the driver during the first stage (1).

5. A control device according to any one of the preceding claims, **characterised in that** in an adjustable second stage (2) of the control device (SV), the steering and acceleration and deceleration actuators (L, DK, B) of the motor vehicle are activated independently of the actuator activation unit (A) by the actuation of corresponding operating elements by the driver in such a way that the driver independently follows the ideal line, and **in that** a determination unit (M), as a function of the current position data of the motor vehicle relative to the ideal line (xrel; yrel), determines indications, and **in that** means (D) are present, which output the indications in the form of optical and/or acoustic and/or haptic signals.

6. A control device according to claim 5, **characterised in that** the indications are output in a display (D), preferably in a head-up display and/or as mechanical or electrical pulses in the steering wheel spokes.

7. A control device according to claim 5 or 6, **characterised in that** the indications are information about the relative location distance (dl) from the position data (x; y) of the ideal line and/or about the relative speed distance (dv) from the optimal speed data (v) of the ideal line and/or about road-specific intervention points (PBr, PBe).

8. A control device according to any one of the preceding claims, **characterised in that** in the second (2) and/or third stage (3) of the control device (SV), the actuator activation unit (A) carries out an automatic emergency intervention into the activation of the actuators (L, DK, B) when there is a threat of leaving the racetrack or an accident.

## Revendications

1. Dispositif de commande (SV) de véhicules automobiles pour l'apprentissage de la conduite autonome selon une ligne idéale, prédéfinie, optimale dans le temps, d'un tracé de parcours (S), bouclé, de préférence d'un tracé de course, comportant :
- une unité de mémoire (SP) contenant au moins les données de positions de la ligne idéale du parcours de trajet conclu (x, y),
- une unité de reconnaissance de positions (P) pour déterminer les données de positions actuelles du véhicule par rapport à la ligne idéale (xrel ; yrel), et
- une unité de commande d'actionneur (A), pour commander automatiquement des actionneurs (L, B, DK) du véhicule automobile, et
dans un premier étage (1), réglable, du dispositif de commande (SV), en fonction des données de positions de la ligne idéale (x, y) et des données de positions actuelles du véhicule par rapport à la ligne idéale (xrel; yrel), au moins les actionneurs de direction (L) du véhicule automobile seront commandés automatiquement par l'unité de commande d'actionneur (A) de façon que le véhicule se déplace au moins en guidage transversal, de manière autonome le long de la ligne idéale du tracé fixé, et
dans une troisième étape (3), réglable, le dispositif de commande (SV) commande les actionneurs (L, DK, B) indépendamment de l'unité de commande d'actionneur (A) en actionnant des éléments de manoeuvre correspondants, par le conducteur, de façon que le conducteur suive lui-même la ligne idéale et qu'aucune indication ne soit émise, dispositif **caractérisé en ce qu'**
en suivant le tracé fixé, dans la troisième étape (3), le dispositif de commande (SV) fournit un coefficient d'évaluation et des moyens (D) sont prévus pour fournir le coefficient d'évaluation à une unité de détermination (M), en fonction de l'écart local relatif de la ligne parcourue et des données de positions (x, y) de la ligne idéale et/ou par l'écart de vitesse relatif par rapport aux données de vitesse (v) optimales de la ligne idéale.

2. Dispositif de commande selon la revendication 1,
**caractérisé en ce que**
en plus des données de positions de la ligne idéale (x, y), l'unité de mémoire (SP) contient les données optimales de vitesse (v) et/ou les données d'accélération et/ou de décélération, et
dans le même étage réglable (1) du dispositif de commande (SV), l'actionneur d'accélération et de décélération (B, DK) sont commandés de façon que, tenant compte du guidage longitudinal, le véhicule soit guidé de manière autonome le long de la ligne idéale avec une vitesse correspondant aux données de vitesse (v).

3. Dispositif de commande selon la revendication 1,
**caractérisé par**
des moyens d'entrée qui permettent de prédéfinir une zone de vitesse (v0, v1, v2, v3) dans laquelle le véhicule se déplace de manière autonome dans le premier étage (1).

4. Dispositif de commande selon l'une des revendications précédentes, **caractérisé en ce que**
dans une unité de détermination (M) en fonction des données de positions de la ligne idéale (x, y), on détermine des informations de conduite, et
des moyens (D) sont prévus qui, au cours de la première étape (1), émettent des informations de conduite sous la forme de signaux optiques et/ou acoustiques et/ou haptiques à destination du conducteur.

5. Dispositif de commande selon l'une des revendications précédentes, **caractérisé en ce que**
dans un second étage réglable (2), le dispositif de commande (SV) actionne les actionneurs de direction, d'accélération et de décélération (L, DK, B) du véhicule automobile en fonction de l'unité de commande d'actionneur (A) en actionnant des éléments de manoeuvre correspondants, par le conducteur, de façon que le conducteur suive lui-même la ligne idéale et qu'en cas d'unité de détermination (M), en fonction des données de positions actuelles du véhicule automobile par rapport à une ligne idéale (xrel; yrel), on détermine si des moyens (D) existent qui fournissent l'indication de forme des signaux optiques et/ou acoustiques et/ou haptiques.

6. Dispositif de commande selon la revendication 5,
**caractérisé en ce que**
des indications sont affichées sur un afficheur (D), de préférence un afficheur frontal et/ou sous forme d'impulsions mécaniques ou électriques dans les branches du volant de direction.

7. Dispositif de commande selon l'une des revendications 5 ou 6,
**caractérisé en ce que**
des indications contiennent des informations relatives à la distance locale relative (dl) par rapport aux données de positions (x, y) de la ligne idéale et/ou à l'écart relatif de vitesse (dv) par rapport aux données de vitesses optimales (v) de la ligne idéale et/ou des points d'action spécifiques à l'extension (PBr, PBe).

8. Dispositif de commande selon l'une des revendications précédentes,
**caractérisé en ce que**
dans la seconde étape (2) et/ou la troisième étape (3), le dispositif de commande (SV) fait passer l'unité de commande d'actionneur (A) en intervention automatique de secours sur la commande des actionneurs (L, DK, B), s'il existe un risque de sortie de piste ou d'accident.
